# EUROPEAN PATENT APPLICATION

(11) **EP 2 019 564 A1**
(43) Date of publication of application: **28.01.2009**
(21) Application number: 07252578.5
(22) Date of filing: 26.06.2007
(51) Int. Cl.: H04W 36/14, H04W 92/06

(54) **An apparatus for contolling handover**

(71) Applicant: Nokia Siemens Networks Oy, 02610 Espoo (FI)
(72) Inventor: Ore, Ivan, 03100 Nummela (FI); Rexhepi, Vlora, 02780 Espoo (FI)
(74) Representative: Ruuskanen, Juha-Pekka

(57) **Abstract**

An apparatus for controlling a handover of a user equipment from a first access network operating a first domain and a second access network operating a second domain. The apparatus being arranged to transmit at least one message over an interface between the apparatus connected to the first network and an entity in the second network.

## Description

### BACKGROUND OF THE INVENTION

### Field of the Invention:

The present invention relates to an apparatus, and in particular to apparatus for providing a service in a communication system.

### Description of related art:

A communication device can be understood as a device provided with appropriate communication and control capabilities for enabling use thereof for communication with others parties. The communication may comprise, for example, communication of voice, electronic mail (email), text messages, data, multimedia and so on. A communication device typically enables a user of the device to receive and transmit communication via a communication system and can thus be used for accessing various service applications.

A communication system is a facility which facilitates the communication between two or more entities such as the communication devices, network entities and other nodes. A communication system may be provided by one more interconnect networks. One or more gateway nodes may be provided for interconnecting various networks of the system. For example, a gateway node is typically provided between an access network and other communication networks, for example a core network and/or a data network.

An appropriate access system allows the communication device to access to the wider communication system. An access to the wider communications system may be provided by means of a fixed line or wireless communication interface, or a combination of these. Communication systems providing wireless access typically enable at least some mobility for the users thereof. Examples of these include wireless communications systems where the access is provided by means of an arrangement of cellular access networks. Other examples of wireless access technologies include different wireless local area networks (WLANs) and satellite based communication systems.

A wireless access system typically operates in accordance with a wireless standard and/or with a set of specifications which set out what the various elements of the system are permitted to do and how that should be achieved. For example, the standard or specification may define if the user, or more precisely user equipment, is provided with a circuit switched bearer or a packet switched bearer, or both. Communication protocols and/or parameters which should be used for the connection are also typically defined. For example, the manner in which communication should be implemented between the user equipment and the elements of the networks and their functions and responsibilities are typically defined by a predefined communication protocol.

In the cellular systems a network entity provides a node for communication with mobile devices in one or more cells or sectors. It is noted that in different systems this network entity is known as a base station or a 'Node B'. Typically the operation of a base station or a "Node B" apparatus and other apparatus of an access system required for the communication is controlled by a particular control entity. The control entity is typically interconnected with other control entities of the particular communication network. Examples of cellular access systems include Universal Terrestrial Radio Access Networks (UTRAN) and GSM (Global System for Mobile) EDGE (Enhanced Data for GSM Evolution) Radio Access Networks (GERAN).

A non-limiting example of another type of cellular access architectures is a concept known as the Evolved Universal Terrestrial Radio Access (E-UTRA) currently under specification in 3^{rd} Generation Partnership Project (3GPP). An Evolved Universal Terrestrial Radio Access Network (E-UTRAN) consists of E-UTRAN Node Bs (eNBs) which are configured to provide base station and control functionalities of the radio access network. The eNBs may provide E-UTRA features such as user plane radio link control/medium access control/physical layer protocol (RLC/MAC/PHY) and control plane radio resource control (RRC) protocol terminations towards the mobile devices.

In system providing packet switched connections the access networks are connected to a packet switched core network via appropriate gateways. For example, the eNBs are connected to a packet data core network via an E-UTRAN access gateway (aGW).

Voice call continuity (VCC) allows users to change between packet switched and circuit switched networks without the call being dropped. The procedures for voice call continuity between the circuit switched (CS) domain (for example GSM cellular access network) and the Internet Protocol (IP) Connectivity Access Network (e.g., WLAN interworking) with home IP multimedia (IM) core network (CN) subsystem functionality are described in the third generation partnership project (3GPP) technical specifications (TS) 24.206 and 23.206. These VCC proposals are based on the Session Initiation Protocol (SIP) and the Session Description Protocol (SDP) and the protocols of the 3GPP Circuit-Switched (CS) domain. The change between domains, in other words the domain transfer procedures are initiated by the VCC communications device or user equipment (UE) application utilizing call setup messages. However the current systems architecture evolution (SAE) architecture does not include yet any inter-working to the CS domain.

Handover allows users to move between different cells within the same radio access technology or between cells belonging to different radio access technologies without the call being dropped. The first case is known as intra - RAT handover. The second case is known as inter-RAT handover.

In the specifications laid down by 3GPP the inter-RAT handover between the GERAN and UTRAN is specified either through CS domain or through the PS domain.

However in some circumstances there may be no CS domain such as within a specific long term evolution (LTE) architecture that is PS only technology. For example in the case of a handover of a LTE voice-over-IP (VoIP) call to a CS voice communication in a GERAN/UTRAN type network the inter-RAT handover requires a domain transfer to be carried out at the same time. Currently specified VCC procedures such as described in the third generation partnership project (3GPP) technical specifications (TS) 24.206 and 23.206 thus cannot be used in handovers in these E-UTRAN/LTE networks.

The domain transfer procedure thus needs to be applied for network technology that supports both CS and PS domains. In 3GPP TSG SA2 the assumption is that the domain transfer procedures will be initiated in the GERAN/UTRAN either by the UE after the handover (this is described as Combinational VCC and described in 3GPP proposal S2-071928 or during the handover by the VMSC as given in some SR VCC alternatives in 3GPP technical request (TR) 23.882 and in proposal S2-072102.

In the combinational VCC 3GPP proposal S2-071928 the VCC procedures used are those as described in 3GPP TS 24.206, and 3GPP TS 23.206 but PS Handover and Dual Transfer Mode (DTM) with its enhancement features should be mandatory. However this carries the disadvantage of requiring the network operators to deploy these features in their networks - of which some operators are not willing to do.

In the other proposal new functionality/interfaces/nodes would be required in the core network (CN) / visited mobile switching centre (VMSC) for supporting these procedures. The impact of this is added complexity in the SAE/LTE architecture.

### SUMMARY

There is provided according to a first aspect of the invention an apparatus for controlling a handover of a user equipment from a first access network operating a first domain and a second access network operating a second domain, wherein the apparatus is arranged to enable handover between the first and second domains by transmitting at least one message over an interface between the apparatus connected to the first network and an entity in the second network.

The interface is preferably the Gs interface.

The apparatus is preferably a gateway entity for the second network.

The apparatus may comprise a Serving GPRS Signalling Node.

The first access network is preferably at least one of: an Enhanced Universal Terrestrial Radio Access Network (E-UTRAN); a GSM EDGE Radio Access Network (GERAN); an Universal Terrestrial Radio Access Network (UTRAN); and an Evolved High-Speed Packet Access (HSPA) Network.

The first domain is preferably a packet switched domain.

The apparatus is preferably arranged to receive a handover request message from a mobility management entity.

The second access network is preferably at least one of: a Universal Terrestrial Radio Access Network; and a GSM EDGE Radio Access Network.

The second domain is preferably a circuit switched domain.

The entity in the second network is preferably a mobile switching centre.

According to a second aspect of the invention there is provided a method of controlling a handover of a user equipment from a first access network operating a first domain and a second access network operating a second domain, comprising: transmitting at least one message over an interface to a second entity in the second network.

The first interface is preferably the Gs interface.

The method may further comprise receiving a handover request message from a first entity in the first network, wherein the handover request message may comprise an address of the second entity.

The handover request message is preferably transmitted from a mobility management entity.

The first access network is preferably at least one of: an Enhanced Universal Terrestrial Radio Access Network (E-UTRAN); a GSM EDGE Radio Access Network (GERAN); an Universal Terrestrial Radio Access Network (UTRAN); and an Evolved High-Speed Packet Access (HSPA) Network.

The first domain is preferably a packet switched domain.

The second access network is preferably at least one of: a Universal Terrestrial Radio Access Network; and a GSM EDGE Radio Access Network.

The second domain is preferably a circuit switched domain.

According to a third aspect of the invention there is provided a computer program product configured to perform a method of controlling a handover of a user equipment from a first access network operating a first domain and a second access network operating a second domain, comprising: transmitting at least one message over an interface to a second entity in the second network.

According to a fourth aspect of the invention there is provided an apparatus for controlling a handover of a user equipment from a first access network operating a first domain and a second access network operating a second domain, the apparatus comprising means for transmitting at least one message over an interface between the apparatus connected to the first network and an entity in the second network.

A telecommunications network may comprise apparatus as described above.

According to a fifth aspect of the invention there is provided an interface for carrying a message from a Serving GPRS Signalling Node connected to a packet switched domain and to a mobile switching centre connected to a circuit switched domain in response to receiving a handover request message from an entity in the first network.

The interface is preferably a Gs interface.

According to a sixth aspect of the invention there is provided a Serving GPRS Signalling Node for controlling a handover of a user equipment from a packet switched domain and a circuit switched domain, wherein the Serving GPRS Signalling Node comprises a transmitter to transmit a message over a first interface to a Mobile Switching Centre connected to the second domain in response to receiving a handover request message.

The interface may be a Gs interface.

### BRIEF DESCRIPTIONS OF THE DRAWINGS

For a better understanding of the present invention and how the same may be carried into effect, reference will now be made by way of example only to the accompanying drawings in which:
Figure 1 shows a schematic presentation of a communication architecture wherein the invention may be embodied;
Figure 2 shows a schematic presentation of data flow in an embodiment of the present invention; and
Figure 3 shows a schematic view of the signalling flow in accordance with a specific embodiment of the present invention.

### DESCRIPTION OF EXEMPLIFYING EMBODIMENTS

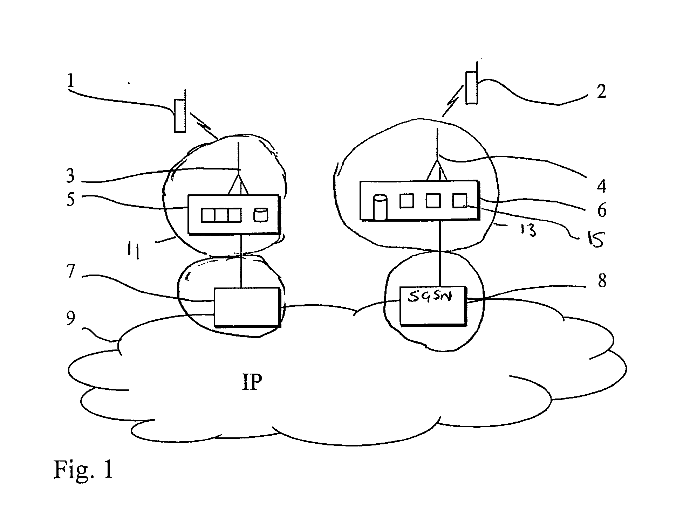

In the following certain specific embodiments are explained with reference to standards such as Global System for Mobile (GSM) Phase 2, Wideband Code Division Multiple Access (W-CDMA), Universal Mobile Telecommunication System (UMTS) and long-term evolution (LTE). The standards may or not belong to a concept known as the system architecture evolution (SAE) architecture, an example of the architecture thereof being shown in Figure 1.

A communication device 1 and 2, for example a user device, can be used for accessing various services and/or applications provided via a communications system. In wireless or mobile systems the access is provided via an access interface between a user device 1, 2 and an appropriate wireless access system. The user device can typically access wirelessly a communication system via at least one base station 3, 4 or similar wireless transmitter and/or receiver node. Non-limiting examples of access nodes are a base station of a cellular system 3 and a base station of a wireless local area network (WLAN) 4. Each user device 1, 2 may have one or more radio channels open at the same time and may be connected to more than one base station 3, 4.

In Figure 1 the base station nodes 3 and 4 are connected to the data network 9 via appropriate gateways 7 and 8, respectively. A gateway function between a base station node and another network may be provided by means of any appropriate gateway node, for example a packet data gateway and/or an access gateway.

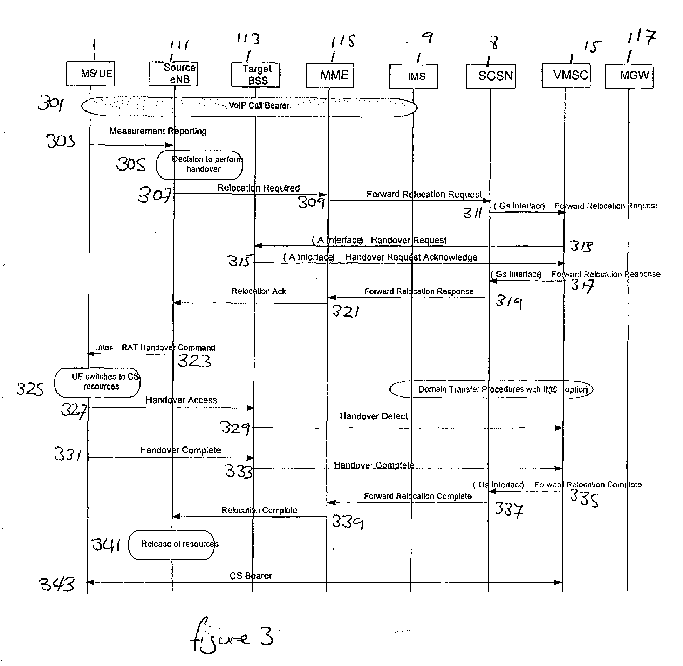

A base station 3, 4 is typically controlled by at least one appropriate controller entity, generally denoted by 5 and 6 in Figure 1. The controller entity can be provided for managing of the overall operation of the base station and communications via the base station. The controller entity is typically provided with memory capacity and at least one data processor. Functional entities such as those referred to by numerals 10 to 15 in Figure 3 may be provided in the controller by means of the data processing capability thereof. The functional entities provided in the base station controller may provide functions relating to radio resource control, access control, packet data context control and so forth.

Figure 1 shows in particular an example wherein one of the access networks 11 represents an evolved radio access system connected to the packet core system 9. Such an access system may be provided, for example, based on architecture that is known from the Evolved Universal Terrestrial Radio Access (E-UTRA) and base on use of the Evolved Universal Terrestrial Radio Access Networks (E-UTRAN) Node Bs (eNBs). It is noted, however, that Figure 1 shows this architecture only to give an example of a possible communication system where the embodiments described below may be provided and that other arrangements and architectures are also possible. The second access network 13 represents an access system such as a GSM EDGE Radio Access Network (GERAN) or Universal Terrestrial Radio Access Network (UTRAN). Although figure 1 shows that user device or user equipment 1 accesses the E-UTRAN network 11 and user device or user equipment is accessing the GERAN or UTRAN network at least one of the user devices 1 and 2 may access the system via both or a different access system not shown.

Within the E-UTRAN 11 data can be carried on what is known as logical channels. Resources known as a packet data context can be associated with each logical channel. Each logical channel can be supposed to contain a data flow that can be controlled by an appropriate control arrangement. It shall be appreciated that a data flow referred herein can be a multiplexed combination of several data flows, but nevertheless it can be understood to be, from control point of view, a single data flow.

The user device 1, 2 can be used for various tasks such as making and receiving phone calls, for receiving and sending data from and to a data network and for experiencing, for example, multimedia or other content. For example, a user device may access applications provided via a data network 9. For example, various applications may be offered in a data network that is based on the Internet Protocol (IP) or any other appropriate protocol. An example of such applications is a voice call via the IP data networks, known as Voice over the Internet (VoIP). An appropriate user device may be provided by any device capable of at least sending or receiving radio signals. Non-limiting examples include a mobile station (MS), a portable computer provided with a wireless interface card or other wireless interface facility, personal data assistant (PDA) provided with wireless communication capabilities, or any combinations of these or the like. A user device is typically provided with at least one data processing entity and at least one memory for use in tasks it is designed to perform. The data processing and storage entities can be provided on an appropriate circuit board and/or in chipsets.

The mobile devices 1 2 may be enabled to communicate with a number of access nodes, for example when it is located in the coverage areas of the two access system stations 11 and 13.

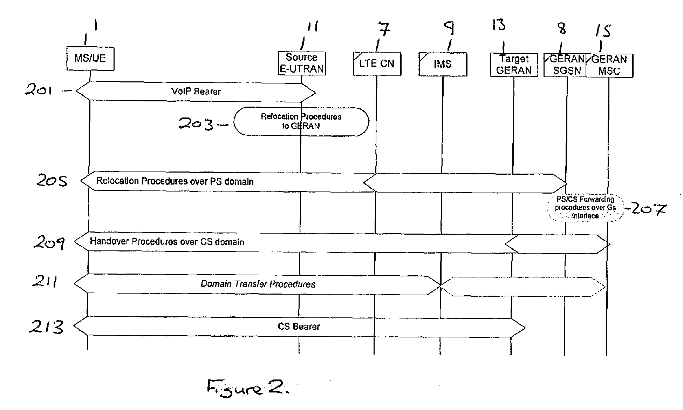

Figure 2 shows architecture and signalling involved in embodiments of the present invention. In this example any inter-RAT handover, in the examples shown in figures 1 and 2 this is shown by a handover from the E-UTRAN to the GERAN but any inter-RAT handover which involves both PS and CS domain exchanges may be performed according to embodiments of the invention.

The embodiments of the invention can thus be summarized as shown below in that the inter-RAT handover is has of two separate procedures. Firstly a handover procedure through the PS domain in E-UTRAN. Secondly a handover procedure through the CS domain in the GERAN / UTRAN. Wherein the association between the two is done a procedure over the Gs interface between the GERAN SGSN and the MSC.

In some embodiments of the invention a new interface may be introduced instead of Gs interface for exchanging information between the core network PS domain nodes (e.g. MME, SGSN) and the CS domain node (e.g. MSC) for the purpose of the interworking.

Figure 2 shows 201 a mobile device, referenced as mobile station (MS) or user equipment (UE) 1, is connected to a source E-UTRAN 11 and is using a voice over IP (VoIP) bearer to communicate to a further user (not shown).

Figure 2 further shows 203 where the source E-UTRAN determines that relocation / handover procedures to GERAN are required.

At reference 205 the first handover procedure is shown where the relocation/handover procedures over the PS domain are communicated from the UE 1 to the LTE core network (CN) 7 via the source E-UTRAN 11 and from the LTE CN 7 to the GERAN SGSN via the IMS network 9 and the Target GERAN 13.

At reference 207 a PS/CS forwarding procedure is shown between the GERAN SGSN 8 and the GERAN MSC 15 over the Gs interface.

At reference 209 the second handover procedure over the CS domain is shown where the MS communicates to the GERAN MSC 15 via the target 13 GERAN.

The result of the second handover procedure is shown by reference 213 in the establishment of a circuit switched bearer between the UE 1 and the target GERAN 13 in order to maintain the communication with the further user without disruption.

Figure 3 shows in further detail an implementation alternative of the present invention.

In step 301, the UE 1 has an established VoIP bearer to the IMS 9 via the E-UTRAN which is shown in figure 3 by the source eNB 113 and the mobility management entity (MME) 115.

The UE 1 is involved in performing measurement reporting of the received signals which is shown in figure 3 by the step 303 as measurement report information is passed from the UE 1 to the source eNB 111. In other embodiments of the invention the UE may make its own handover decisions and trigger a handover request message to be sent.

In step 305, the source eNB 111 determines that a handover is required and initiates a procedure to perform a handover.

In step 307, the source eNB 111 transmits a relocation request to the MME 115.

In step 309 the MME 115 forwards the relocation request to the source SGSN 8 via the IMS network 9.

In step 311 the SGSN forwards the relocation request to the visited mobile switching centre (VMSC) of the target access network via the Gs interface.

In step 313 the VMSC transmits a handover request to the target base station (BSS) 113 over the A interface.

In step 315 the target BSS 113 transmits an handover request acknowledgement message to the VMSC 15 of the target access network over the A interface.

In step 317 the VMSC 15 transmits a forward relocation response to the SGSN of the target network over the Gs interface.

In step 319 the SGSN 115 forwards the forward relocation response to the MME 115.

In step 321 the MME 115 transmits a relocation acknowledgement message to the source eNB 111.

In step 323 the source eNB 111 transmits an inter-RAT handover command to the UE 1.

In step 325 the UE 1 switches to CS resources.

In step 327 the UE 1 transmits a Handover access message to the target BSS 113.

In step 329 the Target BSS 113 transmits a handover detect message to the VMSC 15.

In step 331 the UE 1 transmits a handover complete message to the target BSS 113.

In step 333 the target BSS 113 forwards the handover complete message to the target VMSC 15.

In step 335 the target VMSC 15 transmits a forward relocation complete message over the Gs interface to the target network SGSN 8.

In step 337 the target network SGSN 8 then forwards the relocation complete message to the MME 115.

In step 339 the MME 115 forwards the relocation complete message to the source eNB 111.

In step 341 the source eNB 111 then releases the PS resources allocated to the UE 1.

In step 343 the CS bearer is established between the UE and the VMSC 15 via the target BSS 113.

The difference between this procedure and the other solutions for PS to CS handovers is that this solution does not advantageously require any changes to the SAE/LTE architecture and does not require any additional CN nodes or interfaces to inter-work with CS domain.

In embodiments of the invention the E-UTRAN nodes may have the means in place to select a CS domain target cell for handover. For example the E-UTRAN node may require the target cell ID and the location area it belongs to.

Thus embodiments of the invention invoke procedures which start with an inter-RAT handover procedure in E-UTRAN. The MME receives from the eNodeB relevant information about the target cell and Location Area Identity (LAI). This information identifies the right SGSN and respectively the right MSC that should be contacted. The MME also exchanges information with MSC via the SGSN by using the S3 and Gs interfaces.

Other advantages when employing embodiments of the invention are that the Gs interface is an existing interface where small updates only are required over the Gs interface.

Furthermore there is no need to create a protocol-tunnel between the MME and a "MSC proxy" (e.g. the alternative solutions for Voice call continuity between IMS over SAE/LTE access and CS domain described in TS23.882.).

This procedure can furthermore be applied to inter-RAT handover from LTE to both GERAN and UTRAN PS or CS domains, and in the same manner on the LTE side for operators with and without PS handover procedures previously implemented in the target RAT.

Furthermore the same security procedures can be utilized as previously used for pure PS handover procedures.

Embodiments of the invention are also applicable in case of handover of VoIP calls from GERAN/UTRAN PS domains to a GERAN/UTRAN CS domains that do not support PS handover.

It is noted that whilst embodiments have been described in relation to mobile devices such as mobile terminals, embodiments of the present invention are applicable to any other suitable type of apparatus suitable for communication via access systems. A mobile device may be configured to enable use of different access technologies, for example, based on an appropriate multi-radio implementation.

It is also noted that although certain embodiments were described above by way of example with reference to the exemplifying architectures of certain mobile networks and a wireless local area network, embodiments may be applied to any other suitable forms of communication systems than those illustrated and described herein. It is also noted that the term access system is understood to refer to any access system configured for enabling wireless communication for user accessing applications.

The above described operations may require data processing in the various entities. The data processing may be provided by means of one or more data processors. Similarly various entities described in the above embodiments may be implemented within a single or a plurality of data processing entities and/or data processors. Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

It is also noted herein that while the above describes exemplifying embodiments of the invention, there are several variations and modifications which may be made to the disclosed solution without departing from the scope of the present invention.

## Claims

1. An apparatus for controlling a handover of a user equipment from a first access network operating a first domain and a second access network operating a second domain, wherein
the apparatus is arranged to enable handover between the first and second domains by transmitting at least one message over an interface between the apparatus connected to the first network and an entity in the second network.

2. An apparatus as claimed in claim 1 wherein the interface is the Gs interface.

3. An apparatus as claimed in claims 1 and 2, wherein the apparatus is a gateway entity for the second network.

4. An apparatus as claimed in claims 1 to 3, wherein the apparatus comprises a Serving GPRS Signalling Node.

5. An apparatus as claimed in claims 1 to 4, wherein the first access network is at least one of:
an Enhanced Universal Terrestrial Radio Access Network (E-UTRAN);
a GSM EDGE Radio Access Network (GERAN);
an Universal Terrestrial Radio Access Network (UTRAN); and
an Evolved High-Speed Packet Access (HSPA) Network.

6. An apparatus as claimed in claim 5, wherein the first domain is a packet switched domain.

7. An apparatus as claimed in claims 5 and 6, wherein the apparatus is arranged to receive a handover request message from a mobility management entity.

8. An apparatus as claimed in claims 1 to 7, wherein the second access network is at least one of:
a Universal Terrestrial Radio Access Network; and
a GSM EDGE Radio Access Network.

9. An apparatus as claimed in claims 1 to 8, wherein the second domain is a circuit switched domain.

10. An apparatus as claimed in claims 1 to 9, wherein the entity in the second network is a mobile switching centre.

11. A method of controlling a handover of a user equipment from a first access network operating a first domain and a second access network operating a second domain, comprising:
transmitting at least one message over an interface to a second entity in the second network.

12. The method as claimed in claim 11 wherein the first interface is the Gs interface.

13. The method as claimed in claims 11 and 12, further comprising receiving a handover request message from a first entity in the first network, wherein the handover request message comprises an address of the second entity.

14. The method as claimed in claims 13, wherein the handover request message is transmitted from a mobility management entity.

15. The method as claimed in claim 11 to 14, wherein the first access network is at least one of:
an Enhanced Universal Terrestrial Radio Access Network (E-UTRAN);
a GSM EDGE Radio Access Network (GERAN);
an Universal Terrestrial Radio Access Network (UTRAN); and
an Evolved High-Speed Packet Access (HSPA) Network.

16. The method as claimed in claim 15, wherein the first domain is a packet switched domain.

17. The method as claimed in claims 11 to 16, wherein the second access network is at least one of:
a Universal Terrestrial Radio Access Network; and
a GSM EDGE Radio Access Network.

18. The method as claimed in claims 11 to 17, wherein the second domain is a circuit switched domain.

19. A computer program product configured to perform a method of controlling a handover of a user equipment from a first access network operating a first domain and a second access network operating a second domain, comprising:
transmitting at least one message over an interface to a second entity in the second network.

20. An apparatus for controlling a handover of a user equipment from a first access network operating a first domain and a second access network operating a second domain, the apparatus comprising
means for transmitting at least one message over an interface between the apparatus connected to the first network and an entity in the second network.

21. A telecommunications network comprising apparatus as claimed in claims 1 to 10.

22. An interface for carrying a message from a Serving GPRS Signalling Node connected to a packet switched domain and to a mobile switching centre connected to a circuit switched domain in response to receiving a handover request message from an entity in the first network.

23. An interface as claimed in claim 22 is a Gs interface.

24. A Serving GPRS Signalling Node for controlling a handover of a user equipment from a packet switched domain and a circuit switched domain, wherein the Serving GPRS Signalling Node comprises a transmitter to transmit a message over a first interface to a Mobile Switching Centre connected to the second domain in response to receiving a handover request message.

25. A Serving GPRS Signalling Node as claimed in claim 24, wherein the interface is a Gs interface.
